# EUROPÄISCHE PATENTANMELDUNG

(11) **EP 1 712 968 A2**
(43) Veröffentlichungstag der Anmeldung: **18.10.2006**
(21) Anmeldenummer: 06005011.9
(22) Anmeldetag: 11.03.2006
(51) Int. Cl.: G05B 19/418

(54) **Automatisierungssystem**

(30) Priorität: 15.04.2005 DE 102005017712
(71) Anmelder: ABB PATENT GmbH, 68526 Ladenburg (DE)
(72) Erfinder: Garrels, Kai, Dipl.-Ing., 68239 Mannheim (DE); Steigmann, Richard, Dipl.-Ing., 67229 Gerolsheim (DE); Schelling, Ralph, Dipl.-Ing., 67065 Ludwigshafen (DE)
(74) Vertreter: Miller, Toivo

(57) **Zusammenfassung**

Es wird ein Automatisierungssystem mit einem Zentralsteuerungs-Modul (2) und digitalen Eingangsmodulen (2, 8, 27, 32, 37) und / oder analogen Eingangsmodulen (4, 9, 27, 32, 37) und / oder digitalen Ausgangsmodulen (5, 10, 27, 32, 37) und / oder analogen Ausgangsmodulen (6, 11, 27, 32, 37) und / oder I/O-Modulen vorgeschlagen, welche Module über ein internes Bussystem (13) miteinander verbunden sind und welche über Leitungen mit digitalen Sensoren (18, 22, 30, 35, 40) und / oder analogen Sensoren (19, 23, 30, 35, 40) und / oder digitalen Aktoren (20, 24, 30, 35, 40) und / oder analogen Aktoren (21, 25, 30, 35, 40) verbunden sind. Das Automatisierungssystem (1) weist mindestens ein Basisstation-Modul (7, 28, 33, 38) auf, welches über mindestens eine Antenne (17, 29, 34, 39) per Funk mit drahtlosen, jeweils eine Antenne (16, 43) aufweisenden Sensoren und / oder Aktoren (15) und / oder I/O-Geräten (41) einer Maschine oder Anlage (14) kommuniziert.

## Beschreibung

Die Erfindung bezieht sich auf ein Automatisierungssystem gemäß dem Oberbegriff des Anspruchs 1. Die Erfindung kann beispielsweise bei Fertigungsanlagen mit bezüglich Energieversorgung und Kommunikation drahtlosen Sensoren und / oder Aktoren verwendet werden.

Als Sensoren bzw. Aktoren können Näherungsschalter/Näherungssensoren, Temperaturmesssensoren, Druckmesssensoren, Strommesssensoren oder Spannungsmesssensoren bzw. mikromechanische, piezoelektrische, elektrochemische, magnetostriktive, elektrostatische oder elektromagnetische Aktoren verwendet werden.

Außer bei Industrierobotern, Herstellungsautomaten und Fertigungsautomaten kann die Erfindung auch bei Steuer/Regelsystemen, Fernsteuersystemen, Schutz- und Sicherheitssystemen (beispielsweise bei Freiluft- oder Innenraum-Schaltanlagen), Alarmsystemen, Zustandsüberwachungs-Systemen, in der Robotertechnik oder ganz allgemein bei Maschinen/Maschinensystemen zum Einsatz gelangen.

Aus der WO 98/017797 respektive EP 0 910 819 B1 ist ein Prozessautomatisierungssystem bekannt, bei dem Terminals in einer Bedien- und Beobachtungsebene und Automatisierungseinrichtungen in einer prozessnahen Automatisierungsebene über Sende/Empfangseinrichtungen und ein Datenübertragungsmedium (Funkverbindung; Telekommunikationsnetz) mit einem Leitrechner kommunizieren. Dieser Leitrechner kann als Superrechner in einem Rechenzentrum stehen und weitere Prozessautomatisierungssysteme steuern.

Aus der WO 99/66473 ist ein Automatisierungssystem mit einer Steuerungsvorrichtung zur Steuerung einer Verarbeitungsvorrichtung, insbesondere einer Fertigungsvorrichtung bekannt, wobei mindestens ein Sensor zur Übertragung von Sensordaten von der Verarbeitungsvorrichtung an die Steuerungsvorrichtung vorgesehen ist. Zur Verringerung des Aufwands bei der Installation von Sensoren wird vorgeschlagen, dass die Sensoren eine Funksendevorrichtung und eine Funkempfangsvorrichtung aufweisen, die zur drahtlosen Übertragung der Sensordaten an die mit der Steuerungsvorrichtung verbundene Empfangsvorrichtung vorgesehen ist.

In der DE 103 47 584 A1 wird ein System mit einer Vielzahl drahtlos gespeister Sensoren und / oder Aktoren als Knoten und einer Basisstation vorgeschlagen, welches in einer Maschine oder Anlage, wie Industrieroboter, Herstellungsautomat oder Fertigungsautomat installiert ist, wobei eine drahtlose Kommunikation per Funk zwischen den Sensoren und / oder Aktoren einerseits und der mit einem Automatisierungsgerät verbundenen Basisstation andererseits erfolgt. Die Basisstation ist derart über elektrische Leitungen mit dem Automatisierungsgerät verbunden, dass jedem drahtlosen Sensor und / oder Aktor eine separate Leitung zugeordnet ist. Dabei kann die Signalübertragung über die elektrischen Leitungen in Form standardisierter DC-Signale erfolgen. Die Basisstation kann in Form einer Basisstation-Steckkarte mit genormtem Steckverbinder ausgebildet sein, welche auf eine E/A-Karte des Automatisierungsgerätes aufsteckbar ist.

Aus der DE 10032 868 A1 wird ein System, insbesondere Automatisierungssystem, mit einer Steuerungstechnik und mehreren Aktoren und Sensoren vorgeschlagen, wobei zur Übermittlung von Sensordaten eine drahtlose Kommunikation zwischen einer an die Steuerungstechnik angeschlossenen Basisstation mit Funkempfänger und den Sensoren mit Funksendern erfolgt, wobei die Basisstation mit mindestens einem Aktor zu einer Aktor/Basisstation zusammengefasst ist. Die Aktor/Basisstation kann eine Verarbeitungseinheit mit integrierter Input/Output-Einheit aufweisen.

Der Erfindung liegt die Aufgabe zugrunde, ein in einfacher Weise projektierbares Automatisierungssystem_der eingangs genannten Art anzugeben.

Diese Aufgabe wird in Verbindung mit den Merkmalen des Oberbegriffes erfindungsgemäß durch die im Kennzeichen des Anspruchs 1 angegebenen Merkmale gelöst.

Die mit der Erfindung erzielbaren Vorteile bestehen insbesondere darin, dass das vorgeschlagene Automatisierungssystem sowohl für eine relativ kleine Anzahl auch für eine relativ große Anzahl an Sensoren und / oder Aktoren projektierbar ist. Spätere Erweiterungen des Automatisierungssystems mit zusätzlichen Sensoren und / oder Aktoren und / oder zusätzlichen Zellen sind problemlos möglich, des gleichen selbstverständlich auch Verkleinerungen des Automatisierungssystem durch Wegfall ursprünglich vorgesehener und betriebener Sensoren und / oder Aktoren und / oder Zellen. Zusätzliche Baukomponenten zur Verbindung zwischen Automatisierungssystem und Basisstation, wie Koppler oder Feldbusstecker sind entbehrlich.

Weitere Vorteile sind aus der nachstehenden Beschreibung ersichtlich.

Vorteilhafte Ausgestaltungen der Erfindung sind in den Unteransprüchen gekennzeichnet.

Die Erfindung wird nachstehend anhand der in der Zeichnung dargestellten Ausführungsbeispiele erläutert. Es zeigen:
- Fig. 1: ein Automatisierungssystem für eine Maschine oder Anlage,
- Fig. 2: ein Automatisierungssystem mit mehreren Basisstationen für eine Anlage mit mehreren Zellen.

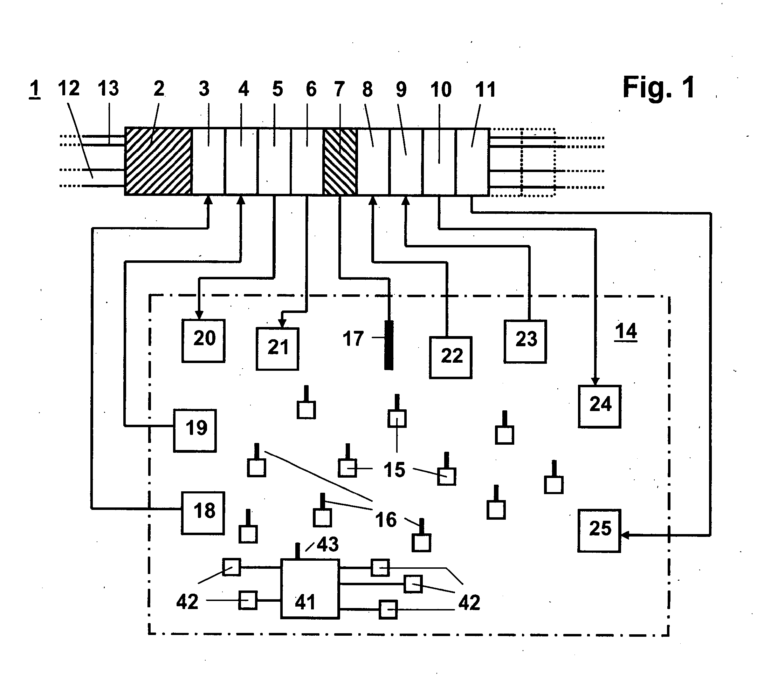

In Fig. 1 ist ein Automatisierungssystem 1 für eine Maschine oder Anlage 14 dargestellt. Die Maschine oder Anlage 14 weist auf:
- eine Vielzahl von drahtlosen Sensoren und / oder Aktoren 15, welche jeweils über eine Antenne 16 verfügen und über Funk mit einem Basisstation-Modul 7 kommunizieren, wozu letzteres mit einer Antenne 17 verbunden ist,
- gegebenenfalls mehrere digitale Sensoren 18 bzw. 22, welche über Leitungen an digitale Eingangsmodule 3 bzw. 8 des Automatisierungssystems 1 angeschlossen sind,
- gegebenenfalls mehrere analoge Sensoren 19 bzw. 23, welche über Leitungen an analoge Eingangsmodule 4 bzw. 9 des Automatisierungssystems 1 angeschlossen sind,
- gegebenenfalls mehrere digitale Aktoren 20 bzw. 24, welche über Leitungen an digitale Ausgangsmodule 5 bzw. 10 des Automatisierungssystems 1 angeschlossen sind,
- gegebenenfalls mehrere analoge Aktoren 21 bzw. 25, welche über Leitungen an analoge Ausgangsmodule 6 bzw. 11 des Automatisierungssystems 1 angeschlossen sind,
- gegebenenfalls mindestens ein drahtloses I/O-Gerät (Input/Output) 41, welches über Leitungen mit Sensoren und/oder Aktoren 42 (digital oder analog) verbunden ist und über eine Antenne 43 verfügt, über welche die Kommunikation per Funk mit dem Basisstation-Modul 7 erfolgt.

Selbstverständlich können auch zwei Antennen (Sendeantenne, Empfangsantenne) an Stelle einer Antenne 17 eingesetzt werden. Alternativ zu separaten Eingangsmodulen und separaten Ausgangsmodulen können auch (analoge oder digitale) I/O-Module (Input / Output) eingesetzt werden. Die Ausführungsform mit drahtlosem I/O-Gerät 41 ist insbesondere dann vorteilhaft, wenn Aktoren 42 am I/O-Gerät 41 angeschlossen sind, welche ihre Energie über das I/O-Gerät beziehen.

Das Automatisierungssystem 1 weist außer den vorstehend angeführten Eingangsmoduln 3, 4, 8, 9 und Ausgangsmoduln 5, 6, 10, 11 sowie dem Basisstation-Modul 7 ein überlagertes Zentralsteuerung-Modul (speicherprogrammierbare Steuerung SPS, Programmable Logic Controller PLC) 2 auf. Alle Module 2-11 können z. B. mechanisch auf einer Hutprofilschiene 12 befestigt und aneinandergereiht sein. Die Kommunikation zwischen den Modulen 2-11 erfolgt über ein internes Bussystem 13, wobei die elektrische Verbindung zwischen jedem Modul und diesem internen Bussystem 13 z. B. automatisch durch Steckkontaktierungen beim Einrasten des jeweiligen Moduls auf der Hutprofilschiene 12 erfolgt. Alternativ kann die besagte elektrische Verbindung z. B. auch durch Verrastung der Module untereinander erfolgen. Als internes Bussystem kann ein SPI Interface (Serial Peripheral Interface) eingesetzt werden.

Wie bereits in Fig. 1 durch gestrichelt eingetragene weitere Module angedeutet ist, bereitet es keinerlei Schwierigkeiten, das Automatisierungssystem 1 mit weiteren Modulen zu bestücken. Dabei spielt es keine Rolle, mit wie vielen digitalen Eingangsmodulen, analogen Eingangsmodulen, digitalen Ausgangsmodulen und analogen Ausgangsmodulen das Automatisierungssystem bestückt ist. Die in Fig. 1 entnehmbare Anzahl dieser Module ist lediglich beispielhaft.

Allgemein gilt folgendes für das System: Die drahtlose Kommunikation per Funk zwischen den Sensoren und / oder Aktoren 15 (sowie drahtlosen I/O-Geräten 41) einerseits und dem Automatisierungssystem 1 andererseits erfolgt unter Einsatz des Basisstation-Moduls 7. Unter dem Begriff Kommunikation wird insbesondere die Weiterleitung von Sensorsignalen (Daten) von den drahtlosen Sensoren (sowie drahtlosen I/O-Geräten 41) an das Automatisierungssystem 1 und die Abgabe von Befehlen vom Automatisierungssystem 1 an die drahtlosen Aktoren (sowie drahtlosen I/O-Geräten 41) verstanden. Zur Trennung der einzelnen Funkverbindungen untereinander und zur Verhinderung von störenden Interferenzen zwischen den einzelnen Kommunikationswegen können allgemein bekannte Verfahren der Funktechnik eingesetzt werden, beispielsweise CDMA oder TDMA.

Das Basisstation-Modul 7 weist vorzugsweise einen Funksender und / oder einen Funkempfänger oder alternativ eine kombinierte Sende/Empfangseinrichtung auf, welche Funksignale abgibt und empfängt, wobei selbstverständlich zumindest eine Antenne 17 vorgesehen ist. Die drahtlose Kommunikation zwischen dem Basisstation-Modul 7 und den einzelnen drahtlosen Sensoren und / oder drahtlosen Aktoren 15 erfolgt vorzugsweise über 2-Weg-Funkverbindungen. Jeder drahtlose Sensor und Aktor (sowie jedes drahtlose I/O-Geräten 41) ist hierzu mit einem Funksender und / oder einem Funkempfänger oder einer kombinierten Sende/Empfangseinrichtung ausgestattet, die Funksignale abgibt und empfängt. Beispielsweise geben die drahtlosen Sensoren Sensorsignale, d. h. Funksignale hinsichtlich des aktuellen Zustandes/Schaltzustandes ab und empfangen Parametersätze über Funk, wie vorgegebene Sensor-Schaltschwellen bzw. Schalthysteresen und / oder vorgegebene Korrekturfaktoren für unterschiedliche zu i-dentifizierende Materialien bei Näherungssensoren.

Die drahtlosen Aktoren (sowie drahtlosen I/O-Geräten 41)empfangen Parametersätze und/oder Steuerbefehle der Steuerung zur Ausführung bestimmter Handlungen und geben Rückmeldesignale, d. h. Funksignale hinsichtlich aktueller Aktor-Informationen, wie die Rückmeldung "gewünschte Handlung erfolgreich / nicht erfolgreich ausgeführt" oder allgemein die Rückmeldung über die aktuelle Aktorstellung an die Steuerung ab.
Die Funksignale zu allen drahtlosen Sensoren und / oder Aktoren 15 (sowie drahtlosen I/O-Geräten 41) bzw. von allen drahtlosen Sensoren und / oder Aktoren (sowie drahtlosen I/O-Geräten 41) werden von dem Basisstation-Modul 7 als zentraler Sende/Empfangseinrichtung des Automatisierungssystems abgegeben bzw. empfangen.

In einer einfacheren, nur zur drahtlosen 1-Weg-Kommunikation mit Sensoren geeigneten Ausführungsform weist das Basisstation-Modul 7 lediglich einen Funkempfänger auf, während jeder drahtlose Sensor lediglich mit einem Funksender versehen ist. Bei dieser Ausführungsform ist es möglich, die erfassten Sensordaten als drahtlose Sensorsignale an.das Basisstation-Modul 7 zu übermitteln.

In einer einfacheren, nur zur drahtlosen 1-Weg-Kommunikation mit Aktoren geeigneten Ausführungsform weist das Basisstation-Modul 7 lediglich einen Funksender auf, während jeder drahtlose Aktor (sowie jedes drahtlose I/O-Geräten 41) lediglich mit einem Funkempfänger versehen ist. Bei dieser Ausführungsform ist es möglich, die notwendigen Steuerbefehle und Parametersätze drahtlos an die Aktoren zu übermitteln.

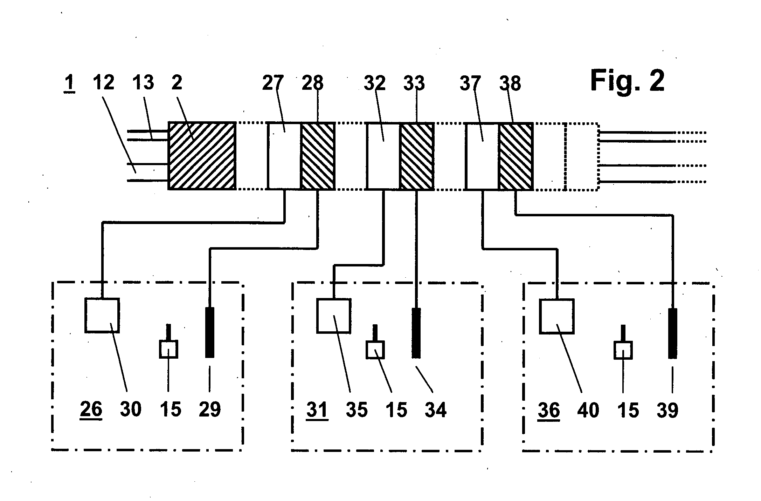

In Fig. 2 ist ein Automatisierungssystem mit mehreren Basisstationen für eine Anlage mit mehreren Zellen dargestellt. Bei dieser Ausführungsform ist das Automatisierungssystem 1 mehreren Zellen 26 bzw. 31 bzw. 36 zugeordnet, die jeweils digitale Sensoren und / oder analoge Sensoren und / oder digitale Aktoren und / oder analoge Aktoren 30 bzw. 35 bzw. 40 sowie eine Vielzahl drahtloser Sensoren und / oder Aktoren 15 (sowie drahtloser I/O-Geräte 41) -jeweils mit Antenne 16 (respektive 43) - aufweisen. Korrespondierend hierzu weist das Automatisierungssystem 1 ein eigenes Basisstation-Modul 28 bzw. 33 bzw. 38 auf, welches über eine der Zelle 26 bzw. 31 bzw. 36 zugeordnete Antenne 29 bzw. 34 bzw. 39 mit den Sensoren und / oder Aktoren 15 (sowie den drahtlosen I/O-Geräten 41) der Zelle kommuniziert. Bei Verwendung des TDMA-Verfahrens für die Funkübertragung werden die einzelnen Zellen 26, 31, 36 mit unterschiedlichen Frequenzen betrieben.

Das Automatisierungssystem 1 weist digitale Eingangsmodule und / oder analoger Eingangsmodule und / oder digitale Ausgangsmodule und / oder analoge Ausgangsmodule 27 bzw. 32 bzw. 37 auf, die über Leitungen mit den digitalen Sensoren und / oder analogen Sensoren und / oder digitalen Aktoren und / oder analogen Aktoren 30 bzw. 35 bzw. 40 der einzelnen Zellen 26 bzw. 31 bzw. 36 verbunden sind. Die Module 27, 28, 32, 33, 37, 38 sind wiederum zusammen mit dem Zentralsteuerungs-Modul 2 nebeneinander auf der Hutprofilschiene 12 befestigt und untereinander über das interne Bussystem 13 miteinander verbunden.

### Bezugszeichenliste:

- 1: Automatisierungssystem
- 2: überlagertes Zentralsteuerung-Modul
- 3.: digitales Eingangsmodul
- 4: analoges Eingangsmodul
- 5: digitales Ausgangsmodul
- 6: analoges Ausgangsmodul
- 7: Basisstation-Modul
- 8: digitales Eingangsmodul
- 9: analoges Eingangsmodul
- 10: digitales Ausgangsmodul
- 11: analoges Ausgangsmodul
- 12: Hutprofilschiene
- 13: internes Bussystem
- 14: Maschine oder Anlage
- 15: drahtlose Sensoren und / oder Aktoren
- 16: Antenne
- 17: Antenne
- 18: digitaler Sensor
- 19: analoger Sensor
- 20: digitaler Aktor
- 21: analoger Aktor
- 22: digitaler Sensor
- 23: analoger Sensor
- 24: digitaler Aktor
- 25: analoger Aktor
- 26: Zelle
- 27: digitales Eingangsmodul und / oder analoges Eingangsmodul und / oder digitales Ausgangsmodul und / oder analoges Ausgangsmodul
- 28: Basisstation-Modul
- 29: Antenne
- 30: digitaler Sensor und / oder analoger Sensor und / oder digitaler Aktor und / oder analoger Aktor
- 31: Zelle
- 32: digitales Eingangsmodul und / oder analoges Eingangsmodul und / oder digitales Ausgangsmodul und / oder analoges Ausgangsmodul
- 33: Basisstation-Modul
- 34: Antenne
- 35: digitaler Sensor und / oder analoger Sensor und / oder digitaler Aktor und / oder analoger Aktor
- 36: Zelle
- 37: digitales Eingangsmodul und / oder analoges Eingangsmodul und / oder digitales Ausgangsmodul und / oder analoges Ausgangsmodul
- 38: Basisstation-Modul
- 39: Antenne
- 40: digitaler Sensor und / oder analoger Sensor und / oder digitaler Aktor und / oder analoger Aktor
- 41: drahtloses I/O-Gerät
- 42: Sensor oder Aktor
- 43: Antenne

## Patentansprüche

1. Automatisierungssystem mit einem Zentralsteuerungs-Modul (2) und digitalen Eingangsmodulen (2, 8, 27, 32, 37) und / oder analogen Eingangsmodulen (4, 9, 27, 32, 37) und / oder digitalen Ausgangsmodulen (5, 10, 27, 32, 37) und / oder analogen Ausgangsmodulen (6, 11, 27, 32, 37) und / oder I/O-Modulen, welche Module über ein internes Bussystem (13) miteinander verbunden sind und welche über Leitungen mit digitalen Sensoren (18, 22, 30, 35, 40) und / oder analogen Sensoren (19, 23, 30, 35, 40) und / oder digitalen Aktoren (20, 24, 30, 35, 40) und / oder analogen Aktoren (21, 25, 30, 35, 40) verbunden sind, **dadurch gekennzeichnet, dass** das Automatisierungssystem (1) mindestens ein Basisstation-Modul (7, 28, 33, 38) aufweist, welches über mindestens eine Antenne (17, 29, 34, 39) per Funk mit drahtlosen, jeweils eine Antenne (16, 43) aufweisenden Sensoren und / oder Aktoren (15) und / oder I/O-Geräten (41) einer Maschine oder Anlage (14) kommuniziert.

2. Automatisierungssystem nach Anspruch 1, **dadurch gekennzeichnet, dass** mehrere Basisstation-Module (28, 33, 38) vorgesehen sind, welche über jeweils eigene Antennen (29, 34, 39) mit unterschiedlichen Zellen (26, 31, 36) zugeordneten drahtlosen Sensoren und / oder Aktoren (15) und / oder I/O-Geräten (41) kommunizieren.

3. Automatisierungssystem nach Anspruch 1 oder 2, **dadurch gekennzeichnet, dass** ein drahtloses I/O-Gerät (41) über Leitungen mit Sensoren und / oder Aktoren (42) verbunden ist.

4. Automatisierungssystem nach einem der vorstehenden Ansprüche, **dadurch gekennzeichnet, dass** die elektrischen Verbindungen zwischen jedem Modul (2 - 11, 27, 32, 37) und dem internen Bussystem (13) automatisch durch Verrastung der Module untereinander erfolgen.

5. Automatisierungssystem nach einem der vorstehenden Ansprüche, **dadurch gekennzeichnet, dass** die nebeneinander angeordneten Module (2 - 11, 27, 32, 37) auf einer Hutprofilschiene (12) befestigt sind.

6. Automatisierungssystem nach Anspruch 5, **dadurch gekennzeichnet, dass** die elektrischen Verbindungen zwischen jedem Modul (2-11, 27, 32, 37) und dem internen Bussystem (13) automatisch durch Steckkontaktierungen beim Einrasten des jeweiligen Moduls auf der Hutprofilschiene (12) erfolgen.
